# EUROPEAN PATENT APPLICATION

(11) **EP 4 808 093 A1**
(43) Date of publication of application: **16.09.2026**
(21) Application number: 26164312.6
(22) Date of filing: 12.03.2026
(51) Int. Cl.: H04L 69/14, H04W 52/00, H04W 76/15, H04W 84/12

(54) **MULTI-LINK POWER MANAGEMENT INDICATION**

(30) Priority: 15.03.2025 IN 202521023151; 20.10.2025 US 202519362745
(71) Applicant: Avago Technologies International Sales Pte. Limited, Singapore 768923 (SG)
(72) Inventor: Verma, Sindhu, Irvine, 92618 (US); Adhikari, Shubhodeep, Irvine, 92618 (US)
(74) Representative: Dilg, Haeusler, Schindelmann Patentanwaltsgesellschaft mbH

(57) **Abstract**

Systems and methods for multi-link power management indication using base-3 compression are disclosed. A multi-link station can include a communication interface and a processor configured to communicate with an access point using a plurality of links. The processor can identify a ternary state of power management for each link of the plurality of links, determine a change in power management state of one or more links, generate, using a ternary encoding, a value for a power management field to identify the change in power management state of the one or more links, and communicate, via the communication interface, a frame comprising the power management field via one link of the plurality of links to the access point. The disclosed techniques enable efficient signaling of power management state transitions for multiple links within a constrained bit field, reducing signaling overhead and supporting scalable multi-link wireless communication.

## Description

### Field of Disclosure

This disclosure generally relates to systems and methods for power management indication in multi-link devices.

### Background of the Disclosure

Wireless communication systems can include multiple devices that communicate over several frequency bands using distinct radio interfaces. Power management in such systems is important for optimizing device performance and conserving energy across various network conditions. However, efficiently signaling power management states for multiple links within the constraints of existing communication protocols is challenging.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments;
FIGS. 1B and 1C are block diagrams depicting computing devices useful in connection with the methods and systems described herein, according to some embodiments;
FIG. 2 is a schematic diagram illustrating power management signaling between an access point and a station, in accordance with some embodiments; and
FIG. 3 is a flow chart illustrating a method for signaling multi-link power management state transitions using ternary encoding, in accordance with some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein relate to a multi-link station. The multi-link station can include a communication interface. The multi-link station can include a processor coupled to the communication interface. The processor can communicate with an access point using a plurality of links. The processor can identify a ternary state of power management for each link of the plurality of links. The processor can determine a change in power management state of one or more links of the plurality of links. The processor can generate, using a ternary encoding, a value for a power management field to identify the change in power management state of the one or more links of the plurality of links. The processor can communicate, via the communication interface, a frame comprising the power management field via one link of the plurality of links to the access point.

In some implementations, the ternary state of power management comprises at least one of a transition to a first power management state, a transition to a second power management state, and a retention of a current power management state. In some implementations, the change in power management state comprises both a transition to a first power management state and a transition to a second power management state. In some implementations, the frame is a control frame. In some implementations, the power management field indicates the change in power management state of a first subset of the plurality of links and no change in power management state of a second subset of the plurality of links. In some implementations, the power management field comprises a predefined number of bits. In some implementations, the frame comprises a control identifier. In some implementations, the ternary encoding compresses the ternary state of each link into a representation comprising less than two bits per each link of the plurality of links indicated in the power management field. In some implementations, a least significant digit of the ternary encoding corresponds to a first link in the plurality of links. In some implementations, an access point determines the change in power management state of the one or more links of the plurality of links based on the ternary encoding.

At least one other aspect relates to a system. The system can include a transmitter configured to communicate with an access point using a plurality of links. The system can include one or more processors. The processors can identify a ternary state of power management for each link of the plurality of links. The processors can determine a change in power management state of one or more links of the plurality of links. The processors can generate, using a ternary encoding, a value for a power management field to identify the change in power management state of the one or more links of the plurality of links. The processors can communicate via the transmitter a frame comprising the power management field via one link of the plurality of links to the access point.

In some implementations, the ternary state of power management comprises at least one of a transition to a first power management state, a transition to a second power management state, and a retention of a current power management state. In some implementations, the change in power management state comprises both a transition to a first power management state and a transition to a second power management state. In some implementations, the frame is a control frame. In some implementations, the power management field indicates the change in power management state of a first subset of the plurality of links and no change in power management state of a second subset of the plurality of links.

At least one other aspect relates to a method. The method can be performed, for example, by one or more processors coupled to non-transitory memory. The method can include identifying a ternary state of power management for each link of a plurality of links. The method can include determining a change in power management state of one or more links of the plurality of links. The method can include generating, using a ternary encoding, a value for a power management field to identify the change in power management state of the one or more links of the plurality of links. The method can include communicating a frame comprising the power management field via one link of the plurality of links to an access point.

In some implementations, the ternary state of power management comprises at least one of a transition to a first power management state, a transition to a second power management state, and a retention of a current power management state. In some implementations, the change in power management state comprises both a transition to a first power management state and a transition to a second power management state. In some implementations, the frame is a control frame. In some implementations, the power management field indicates the change in power management state of a first subset of the plurality of links and no change to a current power management state of a second subset of the plurality of links.

Embodiments of the present disclosure can provide systems and methods for multi-link power management indication. Wireless communication systems can include devices that support multiple frequency bands by using distinct radio interfaces, such as in multi-link Wi-Fi architectures. In such environments, power management signaling can be used to coordinate transitions between active and doze states across several independent links, such as those operating in the 2.4 GHz, 5 GHz, or 6 GHz bands. Specifically, power management signaling can be used to signal either a transition to an active state, transition to a doze state, or no change in state. A straightforward method of signaling power management state may be one-to-one bit mapping (e.g., where "11," "00," and "10" represent three states), however one-to-one bit mapping may require two bits per link to represent three distinct states. A power management state indication using one-to-one bit mapping may exceed the available space in signaling frames, since the IEEE 802.11be standard (and subsequent IEEE standards) supports up to 16 simultaneous links, frames used to indicate state transition may have constrained space, and communication protocols may require that a power management state indication be included for each link associated with the device sending the frame. For example, a multi-link power management (MLPM) high efficiency (HE) variant A-control subfield may be a frame used to indicate transitions in power management state. The MLPM HE variant A-control subfield includes 30 bits, 4 bits of which are used to indicate a control identifier that identifies the operation being performed by the frame. This may not provide sufficient space to signal one of three states for 16 links using one-to-one bit mapping, which would use 32 bits. As a result, representing one of three possible states per link using one-to-one bit mapping may exceed the available space in constrained frame formats such as the MLPM HE Variant A-control subfield.

While some alternative methods may allow for state-change signaling within the constrained space of the MLPM HE variant A-control subfield, they do not support the transmission of a single frame capable of indicating any one of the three possible states for each associated link. For example, narrowing the number of states down to two (e.g., removing the no-transition states) may allow each link to be represented by one bit, however it may also require the device transmitting the MLPM HE variant A-control subfield to be aware of the state of each link. If a device is unaware of a link's current state or has not been properly notified of a change, it may inadvertently trigger an unintended state transition on that link using this method. Another example may send a first frame for transitions to a first state (e.g., the active state) and a second frame for transitions to a second state (e.g., the doze state). In this example, a bit value of "1" may indicate a transition to the state associated with the frame and a bit value of "0" may indicate no transition. While this approach enables signaling of all three states (e.g., allows the option of indicating no transition for at least some links in addition to a doze state and an active state), it may consume additional computing resources, as it involves the generation, transmission, and processing of two frames instead of just one to signal transitions to both a first state (e.g., the active state) for at least one link and a second state (e.g., the doze state) for at least one other link.

The present disclosure provides systems and methods for transmitting a single power management field that can indicate one of three states for a plurality of links. For example, by generating a ternary encoding that compresses the state indications, the systems and methods may fit the indication within a constrained number of bits. Specifically, a base-3 representation of the power state of each of the 16 links may be used to compress the state information. This may allow one of three states to be represented for each link within the power management field at a rate of less than two bits per link, which can allow power management state information for 16 links to be indicated within a MLPM HE A-control subfield.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of multi-link power management indication.

### A. Computing and Network Environment

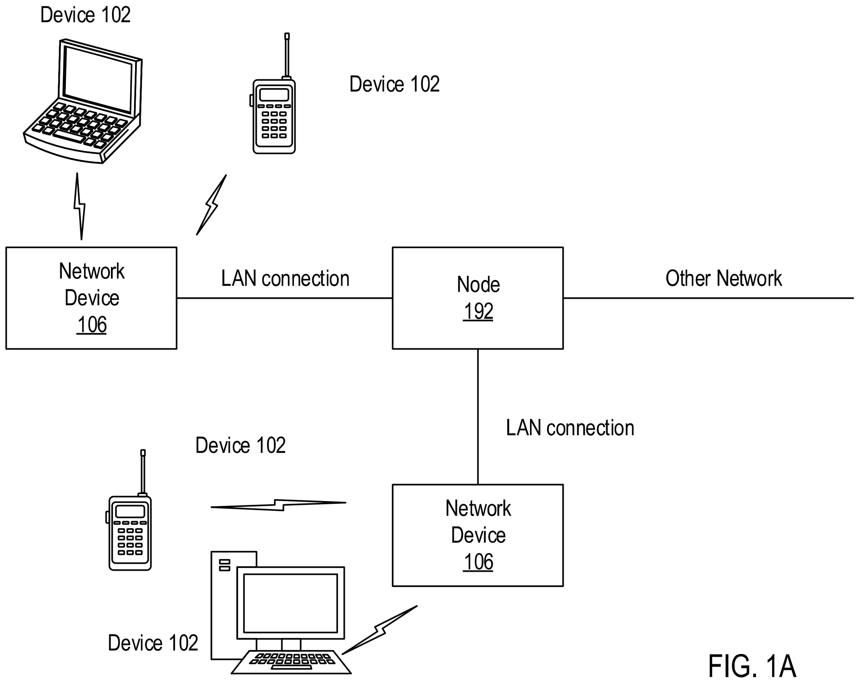

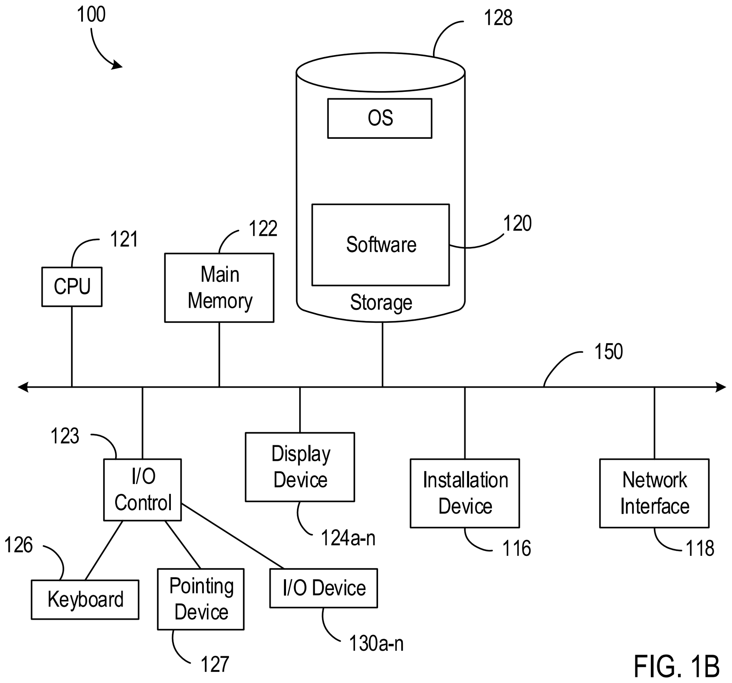

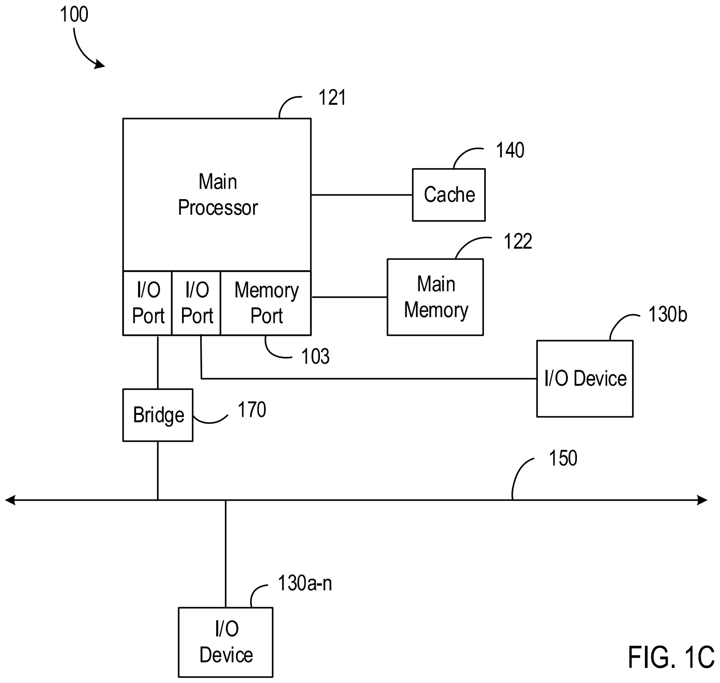

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.1 1ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. MULTI-LINK POWER MANAGEMENT INDICATION

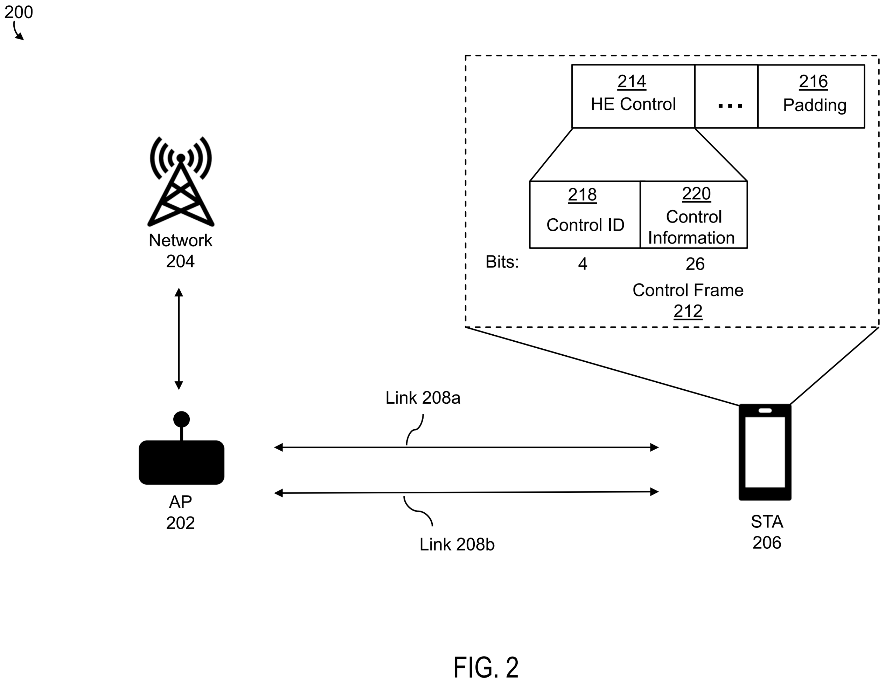

FIG. 2 is a schematic diagram illustrating power management signaling between an access point and a station, in accordance with some embodiments. A system 200 for power management signaling can include an access point (AP) 202, a network 204, a station (STA) 206, a first link 208a and a second link 208b (collectively referred to as links 208), and a control frame 212. The control frame 212 can include an HE control subfield 214, padding 216, a control identifier (ID) 218, and control information 220.

The links 208 may be wireless connections established between the AP 202 and the STA 206. The links 208 may be associated with distinct frequency bands (e.g., 2.4 GHz, 5 GHz, 6GHz and/or the like). Different links may be used to transmit data from the AP 202 to the STA 206 to improve reliability and performance of data transmissions. For example, different links may be associated with different frequency bands, transmission protocols, or channel conditions. The AP 202 and/or the STA 206 can therefore improve performance of data transmission by dynamically allocating data to links based on channel conditions and attributes of the data being transmitted. In some examples, one of the links 208 may be transitioned to a doze state when not actively transmitting or receiving data to conserve network resources. As an example, this selective power management can help extend battery life of the STA 206 by reducing operations (e.g., signal scanning, data transmission, and/or the like) executed on that link. A link that is transitioned to a doze state can then be transitioned back to an active state based on a frame, such as the control frame 212. The control frame 212 may be transmitted on this link (e.g., the link that is transitioned back to an active state) or on another link. This may allow the link to be quickly activated without the overhead of a full reinitialization.

The AP 202 can be a wireless network device that communicates with one or more stations over multiple wireless links 208. The AP 202 can transmit and receive frames to and from stations such as station 206. For example, the AP 202 can receive power management indications from stations such as the station 206. In some examples, the AP 202 may manage transmissions over the links 208. For example, the AP 202 can coordinate transmissions to and from one or more stations, including STA 206, by scheduling transmission opportunities and dynamically managing network resources across the links 208. In some examples, the AP 202 can manage data transmissions based on control frames, such as the control frame 212, received from associated STAs. In these examples, the AP 202 may parse the control frames to identify a type of HE operation and extract corresponding operational parameters.

The network 204 may be any type of communication network that can support wireless data exchange to and from the AP 202. For example, the network 204 may be a Wi-Fi network, cellular network, and/or the like. By connecting to the network 204, the AP 202 may connect to external data sources (e.g., cloud services, other networked devices, and/or the like). The AP 202 may therefore function as a gateway through which STA 206 can access external data sources and services available via the network 204.

The STA 206 can be any device capable of wirelessly communicating with the AP 202, such as a smartphone, laptop, tablet, and/or the like. In an example, the STA 206 may be a multi-link device that can support communication over multiple of the links 208. In some examples, the STA 206 may activate or deactivate one or more links. The STA 206 may transition one of the links 208 to a doze state based on predefined link management logic. For example, the STA 206 may transition one of the links 208 to a doze state based on determining that a threshold amount of time has passed since the last transmission was received from the AP 202 on that link. Transitioning a link to a doze state may involve deactivating a transceiver associated with that link. By deactivating that transceiver, the STA 206 may conserve battery. The STA 206 may similarly activate links. For example, based on predefined link management logic, such as threshold signal strength on a currently active link, the STA 206 can transmit the control frame 212 to indicate that one of the links 208 should be transitioned from a doze state to an active state.

The control frame 212 can be a frame transmitted from the STA 206 to the AP 202 to signal power management state transitions. As an example, if the first link 208a is currently active and the second link 208b is in a doze state, the STA 206 can transmit the control frame 212 to indicate that the first link 208a should be transitioned to a doze state and/or the second link 208b should be transitioned to an active state. In this example, the STA 206 can indicate that there should be no change in power management state for either the first link 208a or the second link 208b.

The control frame 212 can include the HE control subfield 214. In an example, the control frame 212 can include one or more HE control subfields, including the HE control subfield 214, and the padding 216 to align the control frame 212 with the desired bit length. The HE control subfield can be a MLPM HE variant A-control subfield that indicates various HE operations, such as resource allocation, transmission scheduling, and modulation parameters for enhanced multi-user communication. The AP 202 may identify the operation associated with the HE control subfield 214 based on the control ID 218. In an example, a control ID value of 10 may indicate multi-link power management indication, while other values may represent the various other HE operations that the HE control subfield 214 can be associated with. In an example, HE control subfields may include 30 bits of information. Of these 30 bits of information, 4 bits may indicate the control ID 218 and 26 bits may indicate the control information 220.

The control information 220 may indicate one or more parameters associated with the HE operation indicated by the control ID 218. For example, the control information 220 can indicate a state change for one or more of the links 208. In some examples, the control information 220 may be compressed data. IEEE standard 802.11be allows up to 16 links, however the control information 220 of the HE control subfield 214 may be limited to 26 bits of information. This may not allow the STA 206 to include an indication of all of the links, since indicating one of three states via a one-to-one bit mapping may use two bits per links. As an example "00" may indicate a doze state, "11" may indicate an active state, and "10" may indicate no state change. Since the STA 206 may be required to include a state indication for each link (e.g., in accordance with the communication protocols it follows), 26 bits may be insufficient to represent a power management indication for the associated links. To solve this technical problem, the STA 206 may compress a state indication for the links 208. The STA 206 may use a base-3 encoding to efficiently represent three states per link. The base-3 encoding may use a modulus operation to isolate the corresponding base-3 digit from the encoded value. This may compress a state representation for up to 16 links such that it fits within 26 bits. In an example, the STA 206 may generate a value "N" as the control information 220 according to equation 1. The AP 202 may then decode the control information 220 according to equation 2. Specifically, the AP 202 may decode each link's state by successively dividing and taking the modulus with decreasing powers of 3. $N = I 0 * \left({3}^{0}\right) + I 1 * \left({3}^{1}\right) + I 2 * \left({3}^{2}\right) + I 3 * \left({3}^{3}\right) + … I 14 * \left({3}^{14}\right) + I 15 * \left({3}^{15}\right)$ $\begin{matrix}I 15 = floor \left(N/\left({3}^{15}\right)\right) ; N = mod \left(N/\left({3}^{15}\right)\right) \\ I 14 = floor \left(N/\left({3}^{14}\right)\right) ; N = mod \left(N/\left({3}^{14}\right)\right) \\ I 13 = floor \left(N/\left({3}^{13}\right)\right) ; N = mod \left(N/\left({3}^{13}\right)\right) \\ ⋯ \\ I 2 = floor \left(N/\left({3}^{2}\right)\right) ; N = mod \left(N/\left({3}^{2}\right)\right) \\ I 1 = floor \left(N/\left({3}^{1}\right)\right) ; N = mod \left(N/\left({3}^{1}\right)\right) \\ 10 = N\end{matrix}$

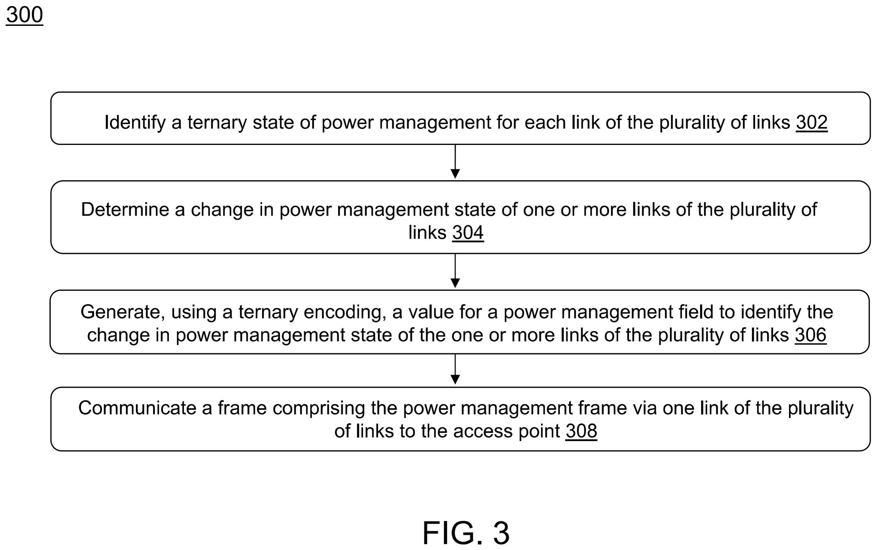

FIG. 3 is a flow chart illustrating a method 300 for signaling multi-link power management state transitions using ternary encoding, in accordance with some embodiments. The method 300 can include identifying a ternary state of power management for each link of the plurality of links at step 302, determining a change in power management state of one or more links of the plurality of links at step 304, generating, using a ternary encoding, a value for a power management field to identify the change in power management state of the one or more links of the plurality of links at step 306, and communicating a frame comprising the power management field via one link of the plurality of links to the access point at step 308. In some implementations, the method 300 is performed by one or more processors (e.g., main processor 121, and/or the like) or circuitry of a wireless device. In other embodiments, the method 300 includes more, fewer, or different steps than shown in FIG. 3.

In some examples, the processors may be part of a multi-link station (e.g., STA 206 of FIG. 2). The multi-link station may include a communication interface and a processor coupled to the communication interface. The processors may be configured to communicate with an access point (e.g., AP 202 of FIG. 2) using a plurality of links (e.g., links 208 of FIG. 2). The term multi-link station may refer to any device (e.g., smartphone, laptop, sensor, and/or the like) that can transmit and/or receive data over a plurality of links. The multi-link station may be a transmitter. The term transmitter may refer to any wireless device that can transmit data to a receiving device. The term communication interface may refer to a transceiver, or any hardware or software component that enables data exchange between devices. The term processor may refer to any computing unit that executes instructions to perform tasks or manage operations. The term access point may refer to any device that enables wireless communication between client devices and a network.

At step 302, the processors may identify a ternary state of power management for each link of the plurality of links. For example, the processors may identify a current power management state of each of the plurality of links. In an example, the processor may identify the ternary state of power management in response to determining that one or more links have satisfied a condition for power management state transition. As an example, in response to determining (e.g., based on predefined logic) that traffic on at least one link of the plurality of links has satisfied a threshold, the processors may identify the ternary state of power management for each link of the plurality of links. The term ternary state of power management may refer to a set of power management states including an active state, doze state, and no transition state, or any set of three states that a link can cycle between to manage power consumption efficiently. The term power management state may refer to any operational mode of a link that affects the energy consumed of associated devices. The term link may refer to a 2.4 GHz link, 5 GHz link, or any other communication channel operating at a defined frequency. The term plurality of links may refer to any group of communication channels through which a device can transmit data.

The ternary encoding may allow the processors to modify the power management state of some links even if it does not know the power management state of other links by allowing it to communicate one of three states for each link. Communication protocols may require that a power management indication frame include an indication for each link associated with the device (e.g., the multi-link station) sending the link. However, the multi-link station may not know or have the most up-to-date information on the power management state of each link. For example, the multi-link station may not know the current power management state of a link due to synchronous updates, delayed signaling, or limited visibility into link-specific activity managed by other devices. By allowing the multi-link station to signal a transition for some links while signaling no transition for others, the system can avoid accidental transitions on links whose current states may not be known.

In some examples, the processors may not be responsible for managing at least some of the plurality of links. For example, in multi-link WiFi implementations, processors may be attached to links. A processor may be attached to a link when the processor is responsible for managing that link. In some examples, processors may not be aware of the power state of links that the processors are not attached to (e.g., because that link is attached to the processors of another station). In these examples, the no transition state may be used to indicate no change to the power states of the links that the processors are not aware of (e.g., because the processors are not responsible for managing the link).

At step 304, the processors may determine a change in power management state of at least one of the plurality of links. For example, the processors may determine that at least one of the plurality of links should be transitioned to another power management state. The processors may determine the specific change in power management state (e.g., whether a link is transitioned to doze or active state) based on determining that one or more links has satisfied a condition for transition. As an example, the processors may determine that traffic on one of the plurality of links has satisfied a threshold and then, in response, determine to activate another link as the change in power management state. As yet an example, the processors may determine that a link has satisfied a condition for transition based on determining that there has been no recent activity on a link. The processors can then determine that a link should be transitioned to a doze state as the change in power management state. Determining a change in power management state may also include identifying which links should not be transitioned to another power management state. Determining which links should be transitioned to a different power management state and which links should be maintained at their current power management state may be based on predefined policies, historical traffic patterns, real-time network conditions, and/or the like.

At step 306, the processors may generate a value (e.g., control information 220 of FIG. 2) for a power management field (e.g., HE control subfield 214 of FIG. 2). For example, the processors may use a ternary encoding to generate a value that indicates the change in power management state to the at least one link. The term ternary encoding may refer to a base-3 encoding, or any encoding scheme that generates a compressed representation of three states. As an example, the processors may generate the value according to equation 1 by encoding multiple power management states into a single numerical representation using a positional encoding scheme, where each position corresponds to a distinct element and contributes to the overall value based on its weight. An access point that receives the value may then decode it according to equation 2 by dividing the value by successive powers of the base to extract individual link states. In some examples, the ternary encoding may compress the ternary state of each link into a representation including less than two bits per link. For example, by using a base-3 encoding, the processors can generate a more compact representation of data compared to traditional one-to-one encoding schemes. The base-3 encoding may therefore allow the processors to transmit data in the power management field that otherwise would not fit. The term value may refer to a compact representation of encoded information, or any numerical value that can be transmitted as a binary code representation. The term power management field may refer to an MLPM HE variant A-control subfield, or any data structure used to convey power state information for one or more communication links.

In some implementations, the ternary encoding may include at least one of a transition to a first power management state (e.g., an active state), a transition to a second power management state (e.g., a doze state), and a retention of a current power management state. For example, the processors may indicate one of these three states (e.g., the first power management state, second power management state, or retention of current power management state) for each of the plurality of links within the value. This may allow the multi-link station to switch or maintain each link in the plurality of links.

In some implementations, the ternary encoding may indicate both a transition to a first power management state and a transition to a second power management state. For example, as a result of generating the ternary encoding that compresses the state indications for the plurality of links, the processors can indicate transitions to both the first power management state and the second power management state within the same frame. This may allow the processors to send a single power management indication frame, as opposed to two power management frames that indicate transitions to the first power management state and transitions to the second power management state, respectively.

In some implementations, the ternary encoding may indicate both a transition to either the first or second power management state and a retention of a current power management state. For example, as a result of generating the ternary encoding that compresses the state indications for the plurality of links, the processor can indicate that there should be no change to the power management state of first subset of the plurality of links while indicating changes in power management state to a second subset of the plurality of links. The term subset may refer to any selection of objects from a larger group (e.g., any selection of links from the plurality of links). In an example, the first subset and the second subset may be mutually exclusive. The ternary encoding allow the processors to modify the power management state of some links even if it does not know the power management state of other links by allowing it to communicate one of three states for each link Communication protocols may require that a power management indication frame include an indication for each link associated with the device (e.g., the multi-link station) sending the link. However, the multi-link station may not know or have the most up-to-date information on the power management state of each link. For example, the multi-link station may not know the current power management state of a link due to synchronous updates, delayed signaling, or limited visibility into link-specific activity managed by other devices. By allowing the multi-link station to signal a transition for some links while signaling no transition for others, the system can avoid accidental transitions on links whose current states may not be known.

In some implementations, the least significant digit of the ternary encoding may correspond to the first link of the plurality of links. As an example, if there are 16 links, a first link (e.g., link 0) may correspond to the least significant base-3 digit. In this example, a sixteenth link (e.g., link 15) may correspond to the most significant base-3 digit. This may map the positional order of digits in the value to the link indices, which can allow the access point to efficiently decode the value by processing each digit in order of significance, thereby reconstructing the power management state of each link with minimal overhead. The term base-3 digit may refer to a trit, or any representation of a single place value in a base-3 numeral system. For example, a base-3 digit may refer to the individual digits assigned to each link, representing one of three possible states while bit may refer to components of the ternary encoding that is a compressed representation of the base-3 digits for the plurality of links. The term least significant digit may refer to the digit that holds the lowest positional weight, such as the first digit in a value when read right to left.

At step 308, the processors may communicate a frame (e.g., control frame 212 of FIG. 2) comprising the power management field to the access point via one of the plurality of links. For example, the processors may transmit the frame via the communication interface to the access point using a link that is currently active. Based on receiving the frame via the one active link, the access point can interpret the encoded power management states for each link, update its internal link state records, and adjust transmissions accordingly. For example, the access point can determine the change in power management state of the one or more links based on decoding the ternary encoding. The term frame may refer to a control frame, or any structured unit of data used for communication between devices.

In some implementations, the frame may be a control frame. For example, the frame can be a control frame that includes one or more subfields (e.g., including the power management indication field) that indicate HE signaling information, such as power management states, scheduling directives, link configuration updates and/or the like. These subfields may enable fine-grained control over link behavior, allowing devices to coordinate power management and scheduling decisions in accordance with HE protocol requirements. In some examples, the frame may include a control identifier (e.g., control ID 218 of FIG. 2). The control identifier may indicate the purpose of subfields included in the frame. For example, a receiving device (e.g., the access point) may identify the purpose of the subfield based on parsing the frame and determining the control identifier within the frame. As an example, a value of 10 may indicate that the subfield is a power management field. The term control frame may refer to any frame used to manage or coordinate communication between devices. The term control identifier may refer to any value that categorizes control-related information.

In some implementations, the power management field may include a predefined number of bits. For example, the power management field may be part of frame where it is assigned a certain number of bits. This may result in consistent frame formatting, which can help ensure that the frame is accurately interpreted by the access point. As an example, the power management field may include 30 bits, 4 of which indicate the control information and 26 of which indicate the value, and therefore the transition of one or more of the plurality of links to a different power management state. The term bit may refer to either 0 or 1, or any binary unit used to represent digital information. The term predefined number of bits may refer to a pre-established quantity of bits assigned to fields within a communication protocol.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A multi-link station comprising:
a communication interface; and
a processor coupled to the communication interface and configured to communicate with an access point using a plurality of links, wherein the processor is configured to:
identify a ternary state of power management for each link of the plurality of links;
determine a change in power management state of one or more links of the plurality of links;
generate, using a ternary encoding, a value for a power management field to identify the change in power management state of the one or more links of the plurality of links; and
communicate, via the communication interface, a frame comprising the power management field via one link of the plurality of links to the access point.

2. The multi-link station of claim 1, wherein the ternary state of power management comprises at least one of a transition to a first power management state, a transition to a second power management state, and a retention of a current power management state.

3. The multi-link station of claim 1, wherein the change in power management state comprises both a transition to a first power management state and a transition to a second power management state.

4. The multi-link station of any one of the claims 1 to 3, wherein the frame is a control frame.

5. The multi-link station of any one of the claims 1 to 4, wherein the power management field indicates the change in power management state of a first subset of the plurality of links and no change in power management state of a second subset of the plurality of links.

6. The multi-link station of any one of the claims 1 to 5, wherein the power management field comprises a predefined number of bits.

7. The multi-link station of any one of the claims 1 to 6, wherein the frame comprises a control identifier.

8. The multi-link station of any one of the claims 1 to 7, wherein the ternary encoding compresses the ternary state of each link into a representation comprising less than two bits per each link of the plurality of links indicated in the power management field.

9. The multi-link station of any one of the claims 1 to 8, wherein a least significant digit of the ternary encoding corresponds to a first link in the plurality of links.

10. The multi-link station of any one of the claims 1 to 9, wherein an access point determines the change in power management state of the one or more links of the plurality of links based on the ternary encoding.

11. A system comprising:
a transmitter configured to communicate with an access point using a plurality of links; and
one or more processors configured to;
identify a ternary state of power management for each link of the plurality of links;
determine a change in power management state of one or more links of the plurality of links;
generate, using a ternary encoding, a value for a power management field to identify the change in power management state of the one or more links of the plurality of links; and
communicate via the transmitter a frame comprising the power management field via one link of the plurality of links to the access point.

12. The system of claim 11, wherein the ternary state of power management comprises at least one of a transition to a first power management state, a transition to a second power management state, and a retention of a current power management state.

13. The system of claim 11 or 12,
wherein the frame is a control frame;
and/or
wherein the power management field indicates the change in power management state of a first subset of the plurality of links and no change in power management state of a second subset of the plurality of links.

14. A method comprising:
identifying, by a processor, a ternary state of power management for each link of a plurality of links;
determining, by the processor, a change in power management state of one or more links of the plurality of links;
generating, by the processor, using a ternary encoding, a value for a power management field to identify the change in power management state of the one or more links of the plurality of links; and
communicating, by the processor, a frame comprising the power management field via one link of the plurality of links to an access point.

15. The method of claim 14, further comprising at least one of the following features:
(A) the ternary state of power management comprises at least one of a transition to a first power management state, a transition to a second power management state, and a retention of a current power management state;
(B) the frame is a control frame;
(C) the power management field indicates the change in power management state of a first subset of the plurality of links and no change to a current power management state of a second subset of the plurality of links.
